# EUROPÄISCHE PATENTSCHRIFT

(11) **EP 2 321 625 B1**
(45) Veröffentlichungstag und Bekanntmachung des Hinweises auf die Patenterteilung: **07.09.2016**
(21) Anmeldenummer: 09780245.8
(22) Anmeldetag: 07.07.2009
(51) Int. Cl.: G01M 17/04

(54) **FAHRWERKSPRÜFUNGSEINRICHTUNG SOWIE VERFAHREN ZUM PRÜFEN EINES FAHRWERKS**
TESTING DEVICE FOR A CHASSIS AND METHOD FOR TESTING A CHASSIS
DISPOSITIF DE CONTRÔLE D'UN CHÂSSIS ET PROCÉDÉ DE CONTRÔLE D'UN CHÂSSIS

(30) Priorität: 01.09.2008 DE 102008041732
(43) Veröffentlichungstag der Anmeldung: 18.05.2011
(73) Patentinhaber: Robert Bosch GmbH, 70442 Stuttgart (DE)
(72) Erfinder: ABRAHAM, Steffen, 31134 Hildesheim (DE); NIEHSEN, Wolfgang, 31162 Bad Salzdetfurth (DE)
(86) Internationale Anmeldenummer: PCT/EP2009/058587
(87) Internationale Veröffentlichungsnummer: WO 2010/023015

(56) Entgegenhaltungen:
- EP-A- 1 098 187
- DE-A1- 19 949 982
- US-B1- 6 748 796
- GOBBI M ET AL: "Indoor testing of road vehicle suspensions" MECCANICA, KLUWER ACADEMIC PUBLISHERS, DO, Bd. 43, Nr. 2, 28. Februar 2008 (2008-02-28), Seiten 173-184, XP019611576 ISSN: 1572-9648
- BARRETT J: "LASERS IMPROVE ACCURACY OF SUSPENSION TESTING" EUREKA, FINDLAY PUBLICATIONS LTD., DARTFORD, GB, Bd. 10, Nr. 2, 1. Februar 1990 (1990-02-01), Seite 42,43,44,46, XP000138549 ISSN: 0261-2097

## Beschreibung

Die vorliegenden Erfindung betrifft eine Fahrwerksprüfungseinrichtung sowie ein Verfahren zum Prüfen eines Fahrwerks.

Bei der Prüfung von Stoßdämpfern eines Kraftfahrzeugs in einer Kraftfahrzeugwerkstatt werden derzeit unterschiedliche Prüfvorrichtungen und Prüfverfahren eingesetzt. Beim Fallklappenprinzip erfolgt eine mechanische Anregung eines Ausschwingvorgangs über eine Fallklappe, und die dynamischen Radaufstandskräfte während des Ausschwingvorgangs werden gemessen. Die dynamische Messung von Radaufstandskräften erfordert eine teure Sensorik, und mit den so gemessenen Werten lassen sich nur unzureichend aussagekräftige Kenngrößen für den Stoßdämpfer ermitteln.

Aus der DE 199 49 982 A1 sind ein Verfahren und eine Einrichtung zum Überprüfen von Radaufhängungskomponenten während einer Fahrt auf einem mit Vertikalauslenkelementen versehenen Prüfplatzboden mit einer Messeinrichtung bekannt. Die Messeinrichtung weist eine optische Messvorrichtung mit mindestens einer zumindest während der Messung ortsfest bezüglich des Prüfplatzes positionierten Bildaufnahmevorrichtung auf, mit der gleichzeitig eine Radbewegung, mindestens ein Karrosserieabschnitt mit einer Karosseriemerkmalsanordnung und ein Abschnitt des Prüfplatzbodens zu mehreren Messzeitpunkten erfassbar sind. Während einer Vertikalauslenkung finden mehrere Bildaufnahmen zur Erfassung der Radbewegung und der Karrosseriebewegung statt.

Aus der US 6,748,796 B1 ist ein Verfahren zum Messen der Bewegung eines Fahrzeugrades relativ zum Rahmen desselben unter Verwendung von Kameras zum Messen der Position bekannt.

Aus der EP 1 098 187 sind ein Verfahren und eine Vorrichtung zur Bestimmung der Eigenschaften der in einem Fahrzeug eingebauten Stoßdämpfer bekannt. Dabei kommt ein Wegmesssystem zum Einsatz, das als ein Bildaufnahmesystem ausgebildet ist.

Es ist daher Aufgabe der vorliegenden Erfindung, eine kostengünstige Fahrwerksprüfungseinrichtung sowie ein kostengünstiges Fahrwerksprüfverfahren anzugeben, mit denen man genaue Messergebnisse und aussagekräftige Kenngrößen für das Fahrwerk erhält.

Diese Aufgabe wird durch den Gegenstand der unabhängigen Ansprüche gelöst. Vorteilhafte Weiterbildungen ergeben sich aus den abhängigen Ansprüchen.

Bei einer erfindungsgemäßen. Fahrwerksprüfungseinrichtung, insbesondere Stoßdämpferprüfungseinrichtung kommen bildbasierte Korrelationssensoren zur dynamischen Messung der Karosserie- und Radbewegung während der Fahrwerksprüfung, insbesondere während der Stoßdämpferprüfung zum Einsatz. Diese bildbasierten Korrelationssensoren sind sehr kostengünstig. Durch den Einsatz mehrerer bildbasierter Korrelationssensoren kann die Karosserie- und Radbewegung mit relativ hoher Auflösung und sehr präzise erfasst werden. Die Korrelationssensoren liefern die zeitliche x- und z-Bewegung, also in Horizontalrichtung und in Vertikalrichtung, des betrachteten Messausschnitts auf dem Rad oder auf der Karosserie während der Schwingungsbewegung. Dadurch ergibt sich eine genaue Abbildung des Schwingverhaltens, wodurch sich in der
betrieben werden. Die Korrelationssensoren berechnen eine Korrelation zwischen zwei in direkt aufeinanderfolgenden Zeitpunkten aufgenommenen Bildbereichen.

Als Korrelationssensoren können prinzipiell beliebige Korrelationssensoren zum Einsatz kommen, geeignete Korrelationssensoren haben bspw. ein Bild Array von 15x15 Pixel. Ein geeigneter Korrelationssensor ist bspw. der optische Maussensor ADNS-5030 low power optical mouse sensor der Firma Avago Technologies Ltd. Dieser hat einen 15x15 Imager, gekoppelt mit einem ASIC zur Datenauswertung und wird für den Einsatz in Computermäusen gefertigt.

Die erfindungsgemäße Fahrwerksprüfungseinrichtung kann für alle derzeit gebräuchlichen Fahrwerksprüfständen, insbesondere Stoßdämpferprüfständen, zum Einsatz kommen, insbesondere bei Prüfständen mit Fallklappen, bei Prüfständen mit Schwingplatten, bei der Überfahrt über ein Hindernis auf dem Messplatzboden, oder bei Wippverfahren.

Die vorliegend mit Bezug auf die erfindungsgemäße Fahrwerksprüfungseinrichtung angegebenen Ausführungsbeispiele und die damit verbundenen Vorteile ergeben sich in gleicher Weise bei dem erfindungsgemäßen Verfahren zum Prüfen eines Fahrwerks, insbesondere eines Stoßdämpfers eines Kraftfahrzeugs, und diese sind ausdrücklich von der Offenbarung der vorliegenden Erfindung umfasst.

Die vorliegende Erfindung betrifft auch die Verwendung eines Korrelationssensors oder mehrerer Korrelationssensoren der hier beschriebenen Art für die Fahrwerksprüfung, insbesondere für die Stoßdämpferprüfung eines Kraftfahrzeugs.

Die Erfindung ist nachfolgend anhand von Ausführungsbeispielen mit Bezug auf die beiliegenden Figuren näher erläutert.
- Figur 1: zeigt eine perspektivische Darstellung einer Stoßdämpferprüfungseinrichtung gemäß einem Ausführungsbeispiel der vorliegenden Erfindung;
- Figur 2: zeigt eine schematische Stoßdämpferprüfungseinrichtungs-Teilansicht in Fahrzeugquerrichtung gemäß einem Ausführungsbeispiel der Erfindung;
- Figur 3: zeigt anhand einer ersten Teilfigur 3(a) eine schematische Ansicht einer ersten Korrelationssensoranordnung und anhand einer zweiten Teilfigur 3(b) eine schematische Ansicht einer zweiten Korrelationssensoranordnung, gemäß einem Ausführungsbeispiel der Erfindung;
- Figur 4: zeigt anhand einer ersten Teilfigur 4(a) ein erstes Korrelationssensor-Bild zu einem Zeitpunkt t = i und anhand einer zweiten Teilfigur 4(b) ein zweites Korrelationssensor-Bild zu einem Zeitpunkt t = i+1, gemäß einem Ausführungsbeispiel der Erfindung;
- Figur 5: zeigt eine erste exemplarische Verlaufsdarstellung der Geschwindigkeitskomponente vx bei einer Vorbeifahrt des Kraftfahrzeugs an dem Messkopf mit den Korrelationssensoren aus Figur 2, gemäß einem Ausführungsbeispiel der Erfindung;
- Figur 6: zeigt eine erste exemplarische Verlaufsdarstellung der Geschwindigkeitskomponente vz bei einer Vorbeifahrt des Kraftfahrzeugs an dem Messkopf mit den Korrelationssensoren aus Figur 2, gemäß einem Ausführungsbeispiel der Erfindung;
- Figur 7: zeigt eine schematische Bewegungsvektorfelddarstellung auf Rad und Karosserie bei einer Vorbeifahrt eines Kraftfahrzeugs an den Korrelationssensoren des Messkopfs aus Figur 2, gemäß einem Ausführungsbeispiel der Erfindung;
- Figur 8: zeigt eine Rad- und Karosserie-Schwingungsergebnis-Darstellung gemäß einem Ausführungsbeispiel der Erfindung, wie sie aus den Ausgangssignalen der Korrelationssensoren bei manuellem Wippen der Karosse im Stand durch eine Datenverarbeitungseinheit bestimmt worden ist; und
- Figur 9: zeigt ein exemplarisches Korrelationssensor-Blockschaltbild gemäß einem Ausführungsbeispiel der Erfindung.

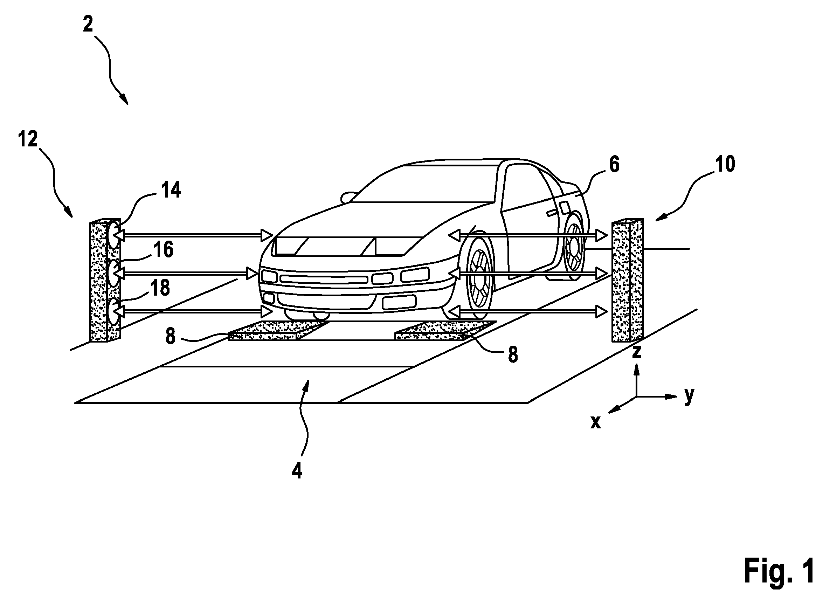

Figur 1 zeigt eine perspektivische Darstellung einer Stoßdämpferprüfungseinrichtung 2 gemäß einem Ausführungsbeispiel der vorliegenden Erfindung.

Die Stoßdämpferprüfungseinrichtung 2 ist an einem Messplatz 4 angeordnet, und mit ihr sollen die Stoßdämpfer eines Kraftfahrzeugs 6 gemessen und überprüft werden, wobei zur Anregung der Stoßdämpfer durch das Kraftfahrzeug 6 jeweils auf dem Messplatz 4 befindliche Hindernisse 8 überfahren werden. In etwa auf der Höhe der Hindernisse 8 ist auf der linken Seite des Messplatzes 4, beabstandet von dem linken Hindernis 8 ein linker Messkopf 10 angeordnet. Ebenso ist auf der rechten Seite des Messplatzes 4, beabstandet von dem rechten Hindernis 8 und etwa auf der Höhe mit diesem ein rechter Messkopf 12 angeordnet. In der exemplarischen Darstellung von Figur 1 sind die beiden Messköpfe 10 und 12 als quaderförmige Säulen ausgebildet und sind auf ihrer Innenseite mit jeweils einem oberen, einem mittleren und einem unteren Korrelationssensor ausgestattet. Während in der perspektivischen Darstellung von Figur 1 die Korrelationssensoren des linken Messkopfs 10 nicht zu erkennen sind, sind der obere Korrelationssensor 14, der mittlere Korrelationssensor 16 und der untere Korrelationssensor 18 des rechten Messkopfs 12 gut zu erkennen. Vorzugsweise sind die Korrelationssensoren mit einer Optik langer Brennweite verkoppelt und in einem sinnvollen Abstand von bspw. 1 m seitlich zum Fahrzeug angebracht.

Die Korrelationssensoren sind in horizontaler Richtung auf die Mitte des Messplatzes 4 ausgerichtet, und sie erfassen jeweils einen kleinen Ausschnitt der Seite des Kraftfahrzeugs 6. In der Stoßdämpferprüfungseinrichtung 2 sind der untere und der mittlere Korrelationssensor jeweils auf der Höhe des Kraftfahrzeugrads angeordnet, und der obere Korrelationssensor befindet sich darüber, etwa auf Höhe des Kotflügels.

Die Korrelationssensoren sind zur Auswertung der von ihnen gelieferten Messdaten mit einer in Figur 1 nicht gezeigten Datenverarbeitungseinheit verbunden. Sie können mit einer in Figur 1 nicht gezeigten Beleuchtungseinheit oder mit mehreren solchen Beleuchtungseinheiten versehen sein, um die jeweils beobachtete Messstelle am Kraftfahrzeug gut auszuleuchten.

Anhand eines Koordinaten-Kreuzes ist die Fahrzeuglängsrichtung mit x, die Fahrzeugquerrichtung mit y und die Vertikalrichtung mit z bezeichnet, und diese Richtungsbezeichnungen werden in der vorliegenden Beschreibung durchgängig angewendet.

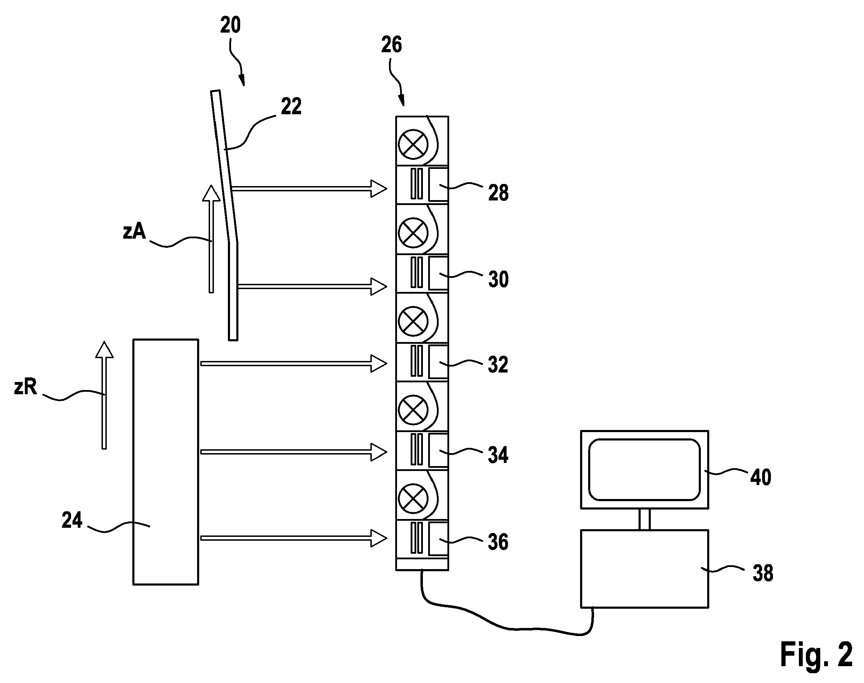

Figur 2 zeigt eine schematische Stoßdämpferprüfungseinrichtungs-Teilansicht 20 in Fahrzeugquerrichtung.

Der säulenförmige Messkopf 26 umfasst einen oberen Karosserie-Korrelationssensor 28, einen unteren Karosserie-Korrelationssensor 30, einen oberen Rad-Korrelationssensor 32, einen mittleren Rad-Korrelationssensor 34 und einen unteren Rad-Korrelationssensor 36. Diese Korrelationssensoren 28 bis 36 haben jeweils den gleichen Aufbau. Sie verfügen über eine vor dem eigentlichen Korrelationssensor angeordnete Optik und über eine jeweils darüber angeordnete Beleuchtungseinheit, bspw. eine LED-Beleuchtung. Die Karosserie-Korrelationssensoren 28 und 30 sind auf Höhe der oberhalb des Kraftfahrzeugrads gelegenen Karosserie, bspw. auf Höhe des Kotflügels angeordnet, und sie erfassen im Betrieb den Schwingungsverlauf der Karosserie, die nachfolgend auch als Aufbau oder Fahrzeugaufbau, bezeichnet wird. Der obere Rad-Korrelationssensor 32 ist auf Höhe der oberen Reifenwand des Kraftfahrzeugrads 24, der mittlere Rad-Korrelationssensor ist auf einer Höhe entsprechend der Mitte der Felge, und der untere Rad-Korrelationssensor 36 ist in etwa auf Höhe der unteren Reifenwand des Kraftfahrzeugrads 24 angeordnet. Der Bewegungsvektor in z-Richtung zR des Kraftfahrzeugrads 24 und der Bewegungsvektor zA des Fahrzeugaufbaus 22 sind in Figur 2 schematisch anhand von Pfeilen dargestellt.

Des Weiteren ist in Figur 2 eine Datenverarbeitungseinheit 38 mit einer Anzeige 40 zu erkennen, die mit den Korrelationssensoren 28 bis 36 verbunden ist und von diesen Messsignale erhält, um diese auszuwerten.

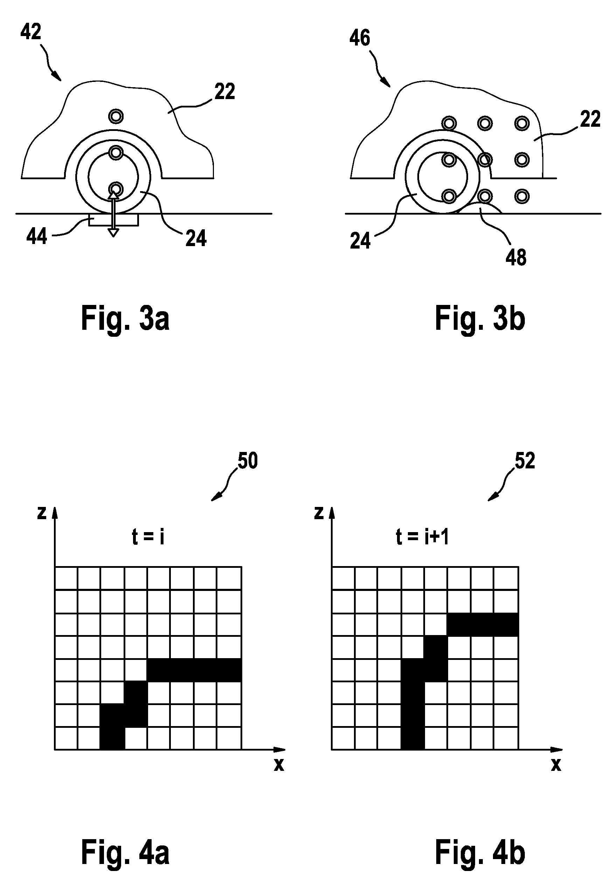

Figur 3 zeigt anhand einer ersten Teilfigur 3(a) eine schematische Ansicht einer ersten Korrelationssensoranordnung 42 und anhand einer zweiten Teilfigur 3(b) eine schematische Ansicht einer zweiten Korrelationssensoranordnung 46.

Bei der ersten Korrelationssensoranordnung 42 steht das Kraftfahrzeugrad auf einer Schwingplatte 44, die zur Stoßdämpferprüfung auf- und abbewegt wird, wie dies in Figur 3(a) durch einen vertikalen Doppelpfeil angedeutet ist. Eine Bewegung des Kraftfahrzeugs in Längsrichtung erfolgt dabei nicht, daher reichen zur erfindungsgemäßen Stoßdämpferprüfung ein oberer, ein mittlerer und ein unterer Korrelationssensor aus. Der obere Korrelationssensor ist dabei auf Höhe des Kotflügels, der mittlere Korrelationssensor auf Höhe der oberen Reifenwand und der untere Korrelationssensor auf Höhe eines unteren Bereichs der Felge angeordnet.

Bei der zweiten Korrelationssensoranordnung 46 ist das Kraftfahrzeugrad 24 direkt vor einem zu überfahrenden Hindernis 48 positioniert. Die Anregung des Schwingvorgangs des Kraftfahrzeugstoßdämpfers erfolgt durch Überfahren dieses Hindernisses 48. Die zweite Korrelationssensoranordnung 46 umfasst dafür eine 3 x 3 - Matrix von Korrelationssensoren, wobei die oberen Korrelationssensoren auf Kotflügelhöhe, die mittleren Korrelationssensoren auf Höhe des oberen Felgenrands und die unteren Korrelationssensoren in einem unteren Bereich der Felge des Kraftfahrzeugrads 24 angeordnet sind.

Die erste Spalte von Korrelationssensoren befindet sich, bezogen auf die Kraftfahrzeug Längsrichtung, unmittelbar vor dem Hindernis 48, die zweite Spalte von Korrelationssensoren etwa auf Höhe des Hindernisses 48 und die dritte Spalte von Korrelationssensoren kurz hinter dem Hindernis 48.

Figur 4 zeigt anhand einer ersten Teilfigur 4(a) ein erstes Korrelationssensor-Bild 50 zu einem Zeitpunkt t = i und anhand einer zweiten Teilfigur 4(b) ein zweites Korrelationssensor-Bild 52 zu einem Zeitpunkt t = i+1.

Die beiden Korrelationssensor-Bilder 50 und 52 sind von dem gleichen Korrelationssensor unmittelbar nacheinander aufgenommen worden, und zwar während oder kurz nach Überfahrt eines Hindernisses durch ein Kraftfahrzeugrad.

Beide Korrelationssensor-Bilder 50 und 52 zeigen ein Feld von 8x8 Pixeln. Auf den beiden Korrelationssensor-Bildern 50 und 52 ist jeweils ein kleiner Ausschnitt der Seite eines Kraftfahrzeugs zu erkennen. In dem ersten Korrelationssensor-Bild 50 sind die folgenden Pixel (x, z) schwarz eingefärbt: (3,1); (3,2); (4,2); (4,3) sowie (5,4) bis (8,4). In dem zweiten Korrelationssensor-Bild 52 sind die folgenden Pixel (x, z) schwarz eingefärbt: (4,1) bis (4,4); (5,4); (5,5) sowie (6,6) bis (8,6).

Gegenüber dem ersten Korrelationssensor-Bild 50 ist das zweite Korrelationssensor-Bild 52 in x-Richtung um x=1 Pixel und in y-Richtung um dz = 2 Pixel verschoben.

Die in den Figuren 1 bis 4 gezeigten Korrelationssensoren nehmen in kurzen Zeitabständen Bilder der Seite des Kraftfahrzeugs auf und bestimmen daraus die Verschiebung des Kraftfahrzeugs in x-Richtung sowie in z-Richtung. Die Korrelationssensoren liefern somit als Ausgangssignal die zeitliche x- und z-Bewegung des Kraftfahrzeugs, insbesondere des jeweils betrachteten Kraftfahrzeugrads oder der jeweils betrachteten Kraftfahrzeugkarosserie während des Schwingungsvorgangs. Diese stattgefundene Verschiebung geben sie als Ausgangssignal an die Datenverarbeitungseinheit aus. In Figur 4 ist das Ausgangssignal des Korrelationssensors dx = 1 Pixel und dz = 2 Pixel.

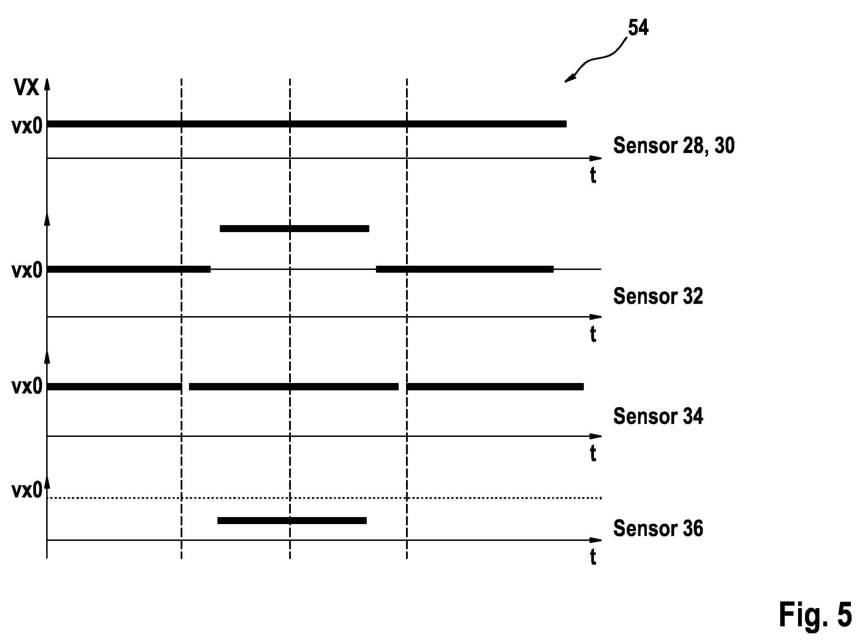

Figur 5 zeigt eine erste exemplarische Verlaufsdarstellung der Geschwindigkeitskomponente vx bei einer Vorbeifahrt des Kraftfahrzeugs an dem Messkopf 26 mit den Korrelationssensoren 28 bis 36, ohne dass das Kraftfahrzeug durch Überfahren eines Hindernisses zur Schwingung angeregt worden ist.

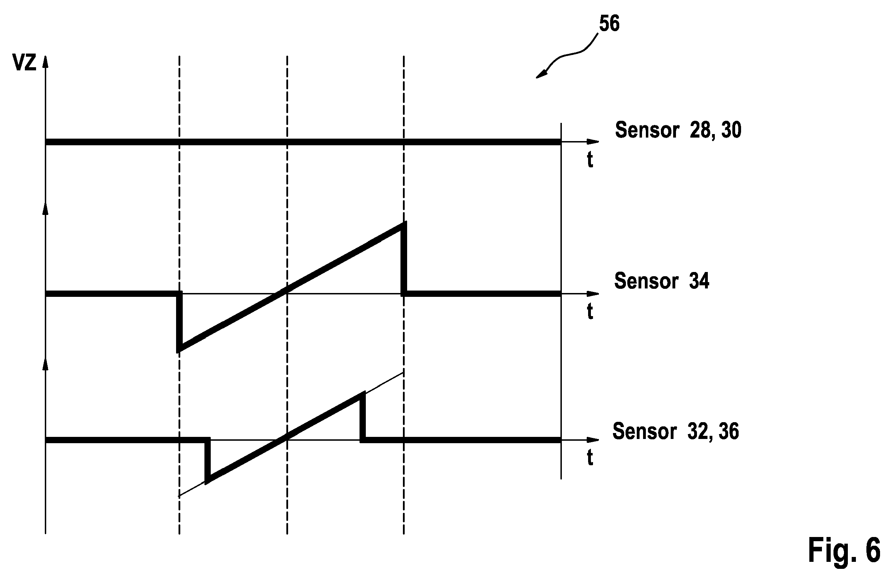

In der ersten Geschwindigkeitskomponenten-Verlaufsdarstellung sowie in der nachfolgenden zweiten Geschwindigkeitskomponenten-Verlaufsdarstellung 56 in Figur 6 sind die Ausgangssignale der Sensoren 28 bis 36 zur besseren Anschauung jeweils übereinander dargestellt.

Nachfolgend werden werden die Schnittpunkte der vier vertikalen Linien mit der Zeitachse in den Figuren 5 und 6 jeweils als Zeitpunkte t0, t1, t2 und t3 bezeichnet.

Die Ausgangssignale der Karosserie-Korrelationssensoren 28 und 30 sind zusammengefasst. Bei einer Vorbeifahrt des Kraftfahrzeugs mit konstanter Geschwindigkeit vx0 ist bei diesen Sensoren 28, 30 die Geschwindigkeitskomponente vx des betrachteten Ausschnitts auf der Karosserie jeweils auch vx. Der obere Rad-Korrelationssensor 32 gibt eine mit der Geschwindigkeit des Kraftfahrzeugs in Vorwärtsrichtung übereinstimmende Geschwindigkeitskomponente vx0 aus, solange sich das Kraftfahrzeugrad nicht im Blickfeld befindet. Solange sich das Kraftfahrzeugrad im Blickfeld befindet, gibt dieser Sensor eine gegenüber vx0 erhöhte Geschwindigkeitskomponente vx aus, da er die Rollbewegung des Reifens berücksichtigt. Der mittlere Rad-Korrelationssensor 34, der ja ungefähr auf Höhe der Mitte der Radfelge angeordnet ist, gibt jeweils auch eine Geschwindigkeitskomponente vx0, die mit der Geschwindigkeit der Vorwärtsbewegung des Kraftfahrzeugs übereinstimmt, aus. Beim Übergang zwischen Karosserie und Reifen bzw. Felge und beim Übergang zwischen Reifen bzw. Felge und Karosserie weist der mittlere Rad-Korrelationssensor eine kurze Signalunterbrechung auf. Der untere Rad-Korrelationssensor 36 erfasst keinen Ausschnitt des Kraftfahrzeugs, solange das Kraftfahrzeugrad nicht in seinem Blickfeld ist. Kurz nach Zeitpunkt t1 und bis vor dem Zeitpunkt t3 befindet sich das Kraftfahrzeugrad in seinem Blickfeld. In diesem Zeitraum gibt er eine Geschwindigkeitskomponente vx aus, die aufgrund der Rollbewegung des Reifens kleiner als die Geschwindigkeitskomponente vx0 ist.

Figur 6 zeigt eine erste exemplarische Verlaufsdarstellung der Geschwindigkeitskomponente vz bei einer Vorbeifahrt des Kraftfahrzeugs an dem Messkopf 26 mit den Korrelationssensoren 28 bis 36, ohne dass das Kraftfahrzeug durch Überfahren eines Hindernisses zur Schwingung angeregt worden ist.

Die von den Karosserie-Korrelationssensoren 28 und 30 ausgegebene Geschwindigkeitskomponente vz beträgt konstant Null.

Die von dem mittleren Rad-Korrelationssensor 34 ausgegebene Geschwindigkeitskomponente vz beträgt zwischen t0 und t1 Null, ist bei t1 kleiner als Null und steigt bis t3 konstant an, ist bei t2 gleich Null und bei t3 größer Null. Nach t3 ist die von dem mittleren Rad-Korrelationssensor 34 ausgegebene Geschwindigkeitskomponente vz wieder Null.

Die von dem oberen Rad-Korrelationssensor 32 und dem unteren Rad-Korrelationssensor 36, die in Figur 6 zusammenfassend dargestellt sind, ausgegebene Geschwindigkeitskomponente vz beträgt von t0 bis kurz nach t1 gleich Null, ist dann kleiner Null und steigt konstant bis kurz vor t3 an, wo sie größer als Null ist. Danach ist die Geschwindigkeitskomponente vz der Sensoren 32 und 36 wieder Null. Der Verlauf der ausgegebenen Geschwindigkeitskomponente vz der Rad-Korrelationssensoren 32, 34 und 36 zwischen den Zeitpunkten t1 und t3 ist durch das In- das-Blickfeld-Kommen des Kraftfahrzeugreifens und durch dessen Rollbewegung bedingt.

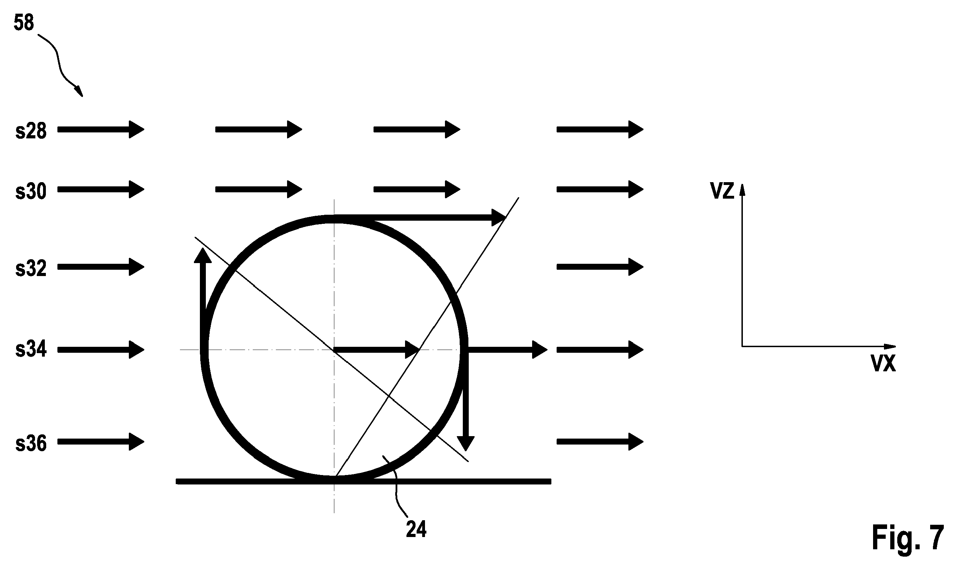

Figur 7 zeigt eine schematische Bewegungsvektorfelddarstellung 58 auf Rad und Karosserie bei einer Vorbeifahrt eines Kraftfahrzeugs an den Korrelationssensoren 28 bis 36 des Messkopfs 26, ohne dass das Kraftfahrzeug zu einer Schwingung angeregt worden ist.

Solange sich das Kraftfahrzeugrad nicht im Blickfeld der jeweiligen Sensoren befindet, hat der durch die Korrelationssensoren berechnete Bewegungsvektor nur eine konstante vx Komponente, und die vz Komponente ist jeweils Null. Beim In-das-Blickfeld-Kommen des Kraftfahrzeugs ist die Bewegungskomponente vx gleich Null und die Bewegungskomponente vz größer Null. Ebenso ist bei dem Aus-dem-Blickfeld-Kommen des Kraftfahrzeugrads die Bewegungskomponente negativ. Bei der Erfassung der Rollbewegung des Reifens auf Höhe des Reifens ist die Bewegungskomponente vz gleich Null, und die Bewegungskomponente vx ist gegenüber der normalen Bewegungskomponente vx0 vergrößert.

Dies ist durch die Abbildung der Rollbewegung durch den Korrelationssensor bedingt.

Zur besseren Anschauung ist in den Figuren 5, 6 und 7 der Geschwindigkeitskomponentenverlauf sowie das Bewegungsvektorfeld bei einer Vorbeifahrt an den Korrelationssensoren ohne eine Schwingungsanregung dargestellt. Bei einer erfolgten Schwingungsanregung würden die Geschwindigkeitskomponenten vx und vz die Schwingung des Kraftfahrzeugs abbilden, wobei die Zerlegung in die Geschwindigkeitskomponenten vx und vz sowie das entsprechende Bewegungsvektorfeld aus Gründen der Einfachheit nicht dargestellt sind.

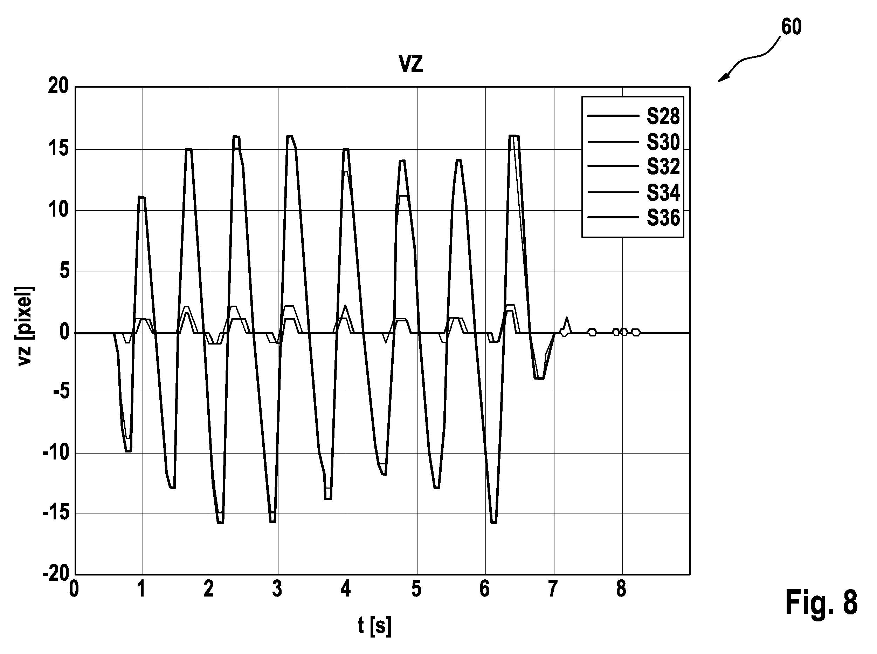

Figur 8 zeigt eine Rad- und Karosserie-Schwingungsergebnis-Darstellung 60, wie sie aus den Ausgangssignalen der Korrelationssensoren 28 bis 36 bei manuellem Wippen der Karosse im Stand durch eine Datenverarbeitungseinheit bestimmt worden ist.

Bei der Rad- und Karosserie Schwingungsergebnis Darstellung 60, die einer Darstellung der von den Korrelationssensoren 28 bis 36 gelieferten Geschwindigkeitskomponenten vz über die Zeit entspricht, sind eine relativ kleine Radschwingung sowie eine demgegenüber deutlich größere Karosserieschwingung zu erkennen. Die Amplitude der Radschwingung in z-Richtung bewegt sich zwischen 1 und 4 Pixeln, die Amplitude der Karosserieschwingung bewegt sich zwischen 10 und 16 Pixeln.

Bei Figur 8 ist die Karosseriebewegung aus der Integration der Verschiebungsmesswerte der Sensoren 28 bis 36 bestimmt worden.

Durch die Korrelationssensoren 28 bis 36 lässt sich das Schwingungsverhalten von Kraftfahrzeugrad und -karosserie demnach auf einfache Weise gleichzeitig sehr genau bestimmen. Aus diesem Schwingungsverhalten können durch Verfahren, die dem Fachmann bekannt sind und hier nicht näher erläutert zu werden brauchen, die relevanten Kenngrößen für den Kraftfahrzeugstoßdämpfer bestimmt werden. Dies kann über ein mechanisches Ersatzmodel erfolgen, wie es bspw. in EP 0 611 960 beschrieben ist, wie es dem Fachmann bekannt ist. Ein anderes beispielhaftes Verfahren ist aus der R. 322550 (hier noch DE-Az. angeben) bekannt.

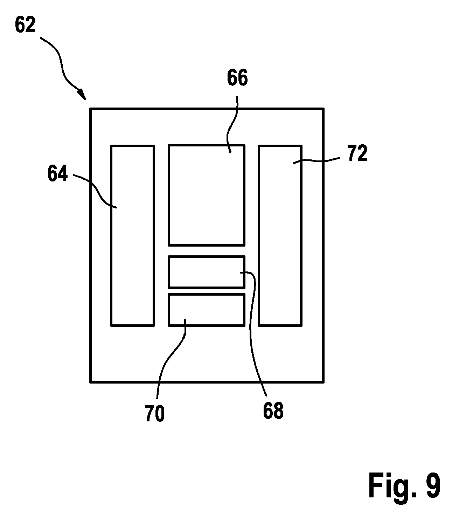

Figur 9 zeigt ein exemplarisches Korrelationssensor-Blockschaltbild 62 gemäß einem Ausführungsbeispiel der Erfindung.

Ein Korrelationssensor umfasst demnach das Bildfeld 66 (Image Array), auf dem das Bild eines beobachteten Messausschnitts auf dem Kraftfahrzeug empfangen wird. Die dort empfangenen Signale werden durch einen digitalen Signalprozessor 68 und einen Oszillator 70 in Signale für die Geschwindigkeitskomponenten vx und vz umgesetzt, die über die seriellen Leitungen 72 an eine Datenverarbeitungseinheit ausgegeben werden. Des Weiteren verfügt der Korrelationssensor 62 über eine Stromversorgung 64.

## Patentansprüche

1. Fahrwerksprüfungseinrichtung (2), insbesondere Stoßdämpferprüfungseinrichtung für ein Kraftfahrzeug (6) auf einem Messplatz (4), dadurch gekenntzeichnet, dass die Fahrwerksprüfungseinrichtung (2)
wenigstens einen seitlich an dem Messplatz (4) angeordneten Korrelationssensor (28-36) mit einer zugeordneten Optik, wobei der Korrelationssensor (28-36) auf den Messplatz (4) gerichtet ist und dazu ausgebildet ist, eine zeitliche Abfolge von Bildern eines Ausschnitts eines sich auf dem Messplatz (4) bewegenden Kraftfahrzeugs (6), insbesondere der Karosserie (22) des Kraftfahrzeugs (6) und des Kraftfahrzeugrads (24), zu erfassen und daraus Richtungs-Geschwindigkeitskomponenten (vx, vz) zu ermitteln, und
eine Datenverarbeitungseinheit (3B), die mit dem Korrelationssensor oder mit den Korrelationssensoren (28-36) verbunden und dazu ausgebildet ist, aus den Richtungs-Geschwindigkeitskomponenten (vx, xz) des Korrelationssensors oder der Korrelationssensoren (28-36) die Bewegung des Kraftfahrzeugs, insbesondere der Karosserie (22) des Kraftfahrzeugs (6) und des Kraftfahrzeugrads (24) zu bestimmen, aufweist.

2. Fahrwerksprüfungseinrichtung (2) nach Anspruch 1, wobei mehrere Korrelationssensoren (28-36) auf unterschiedlichen Höhen vorgesehen sind, um Ausschnitte des Kraftfahrzeugs (6) unterschiedlicher Höhe zu erfassen.

3. Fahrwerksprüfungseinrichtung (2) nach Anspruch 2,
wobei wenigstens ein Rad-Korrelationssensor (32-36) auf Höhe des Kraftfahrzeugsrads (24) angeordnet ist, um ein Bild eines Ausschnitts des Kraftfahrzeugrads (24) zu erfassen,
wobei der Korrelationssensor/die Korrelationssensoren (32-36) dazu ausgebildet ist/sind, eine zeitliche Abfolge von Bildern eines Ausschnitts des sich auf dem Messplatz (4) bewegenden Kraftfahrzeugrads (24) zu erfassen und daraus Richtungs-Geschwindigkeitskomponenten (vx, vz) zu ermitteln.

4. Fahrwerksprüfungseinrichtung (2) nach Anspruch 2 oder 3,
wobei wenigstens ein Karosserie-Korrelationssensor (28, 30) auf Höhe der Karosserie (22) angeordnet ist, um ein Bild eines Ausschnitts der Karosserie (22) zu erfassen,
wobei der Korrelationssensor/die Korrelationssensoren (28, 30) dazu ausgebildet ist/sind, eine zeitliche Abfolge von Bildern eines Ausschnitts der Karosserie (22) des sich auf dem Messplatz (4) bewegenden Kraftfahrzeugs (6) zu erfassen und daraus Richtungs-Geschwindigkeitskomponenten (vx, vz) zu ermitteln.

5. Fahrwerksprüfungseinrichtung (2) nach einem der Ansprüche 1 bis 4,
weiterhin aufweisend ein Hindernis (8) zur Überfahrung durch das Kraftfahrzeug (6) und zur Anregung der Stoßdämpfer des Kraftfahrzeugs (6),
wobei das Hindernis (8) bezogen auf die Bewegungsrichtung des Kraftfahrzeugs (6) vor den Korrelationssensoren (14-18) oder auf der Höhe der Korrelationssensoren (14-18) angeordnet ist.

6. Fahrwerksprüfungseinrichtung nach Anspruch 5, wobei eine Anordnung von Korrelationssensoren (46) vorgesehen ist, die wenigstens zwei bezogen auf die Bewegungsrichtung des Kraftfahrzeugs (6) nebeneinander angeordnete Gruppen von Korrelationssensoren umfasst.

7. Fahrwerksprüfungseinrichtung nach einem der Ansprüche 1 bis 4,
weiterhin aufweisend eine Fallklappe oder eine Schwingplatte (44) für ein Kraftfahrzeugrad (24) zur Stoßdämpferanregung des Kraftfahrzeugs (6),
wobei die Fallklappe oder die Schwingplatte bezogen auf die Bewegungsrichtung des Kraftfahrzeugs auf der Höhe der Korrelationssensoren (42) angeordnet ist.

8. Fahrwerksprüfungseinrichtung (2) nach einem der Ansprüche 1 bis 7, wobei ein seitlich des Messplatzes (4) angeordneter Messkopf (10, 12; 26) vorgesehen ist, der wenigstens einen Korrelationssensor (14-18; 28-38) umfasst.

9. Fahfwerksprüfungseinrichtung (2) nach Anspruch 8, wobei ein zweiter Messkopf (12) seitlich des Messplatzes (4) auf der in Fahrzeugquerrichtung gegenüberliegenden Seite angeordnet ist, wobei der zweite Messkopf (12) wenigstens einen Korrelationssensor (14-18) umfasst.

10. Verfahren zum Prüfen eines Fahrwerks, insbesondere eines Stoßdämpfers eines Kraftfahrzeugs (6), aufweisend die folgenden Schritte;
Anregen des Kraftfahrzeugs (6) zu einer Schwingung;
Erfassen von zeitlichen Abfolgen von Ausschnitts-Bildern des sich auf dem Messplatz (4) bewegenden Kraftfahrzeugs (6) und Ermitteln von RichtungsGeschwindigkeitskomponenten (vx, vz) daraus durch seitlich an dem Messplatz (4) angeordnete Korrelationssensoren (14-18) mit jeweils zugeordneter Optik; Bestimmen der Bewegung des Kraftfahrzeugs, insbesondere der Karosserie (22) und des Kraftfahrzeugrads (24), aus den Richtungs-Geschwindigkeitskomponenten (vx, vz) des Kraftfahrzeugs (6) durch eine Datenverarbeitungseinheit (38).

## Claims

1. Device (2) for testing a chassis, in particular device for testing a shock absorber for a motor vehicle (6) on a measuring station (4), **characterized in that** the device (2) for testing a chassis has
at least one correlation sensor (28-36) which is arranged laterally on the measuring station (4) and has an assigned optical system, wherein the correlation sensor (28-36) is directed toward the measuring station (4) and is designed to capture a chronological sequence of images of a portion of a motor vehicle (6) which moves on the measuring station (4), in particular the bodywork (22) of the motor vehicle (6) and the wheel (24) of the motor vehicle, and to determine direction-speed components (vx, vz) therefrom, and
a data processing unit (38) which is connected to the correlation sensor or to the correlation sensors (28-36) and is designed to determine the movement of the motor vehicle, in particular of the bodywork (22) of the motor vehicle (6) and the wheel (24) of the motor vehicle, from the direction-speed components (vx, vz) of the correlation sensor or of the correlation sensors (28-36).

2. Device (2) for testing a chassis according to Claim 1, wherein a plurality of correlation sensors (28-36) are provided at different heights in order to capture portions of the motor vehicle (6) at different heights.

3. Device (2) for testing a chassis according to Claim 2,
wherein at least one wheel correlation sensor (32-36) is arranged at the height of the wheel (24) of the motor vehicle in order to capture an image of a portion of the wheel (24) of the motor vehicle, wherein the correlation sensor/correlation sensors (32-36) is/are designed to capture a chronological sequence of images of a portion of the wheel (24) of the motor vehicle which moves on the measuring station (4) and to determine direction-speed components (vx, vz) therefrom.

4. Device (2) for testing a chassis according to Claim 2 or 3,
wherein at least one bodywork correlation sensor (28, 30) is arranged at the height of the bodywork (22) in order to capture an image of a portion of the bodywork (22),
wherein the correlation sensor/correlation sensors (28, 30) is/are designed to capture a chronological sequence of images of a portion of the bodywork (22) of the motor vehicle (6) which is moving on the measuring station (4) and to determine direction-speed components (vx, vz) therefrom.

5. Device (2) for testing a chassis according to one of Claims 1 to 4,
also having an obstacle (8) to be travelled over by the motor vehicle (6) and to trigger the shock absorbers of the motor vehicle (6),
wherein the obstacle (8) is arranged in front of the correlation sensors (14-18) or at the height of the correlation sensors (14-18) with respect to the direction of movement of the motor vehicle (6).

6. Device for testing a chassis according to Claim 5, wherein an arrangement of correlation sensors (46) is provided which comprises at least two groups of correlation sensors which are arranged one next to the other with respect to the direction of movement of the motor vehicle (6).

7. Device for testing a chassis according to one of Claims 1 to 4,
also having a trap door or a vibratory plate (44) for a wheel (24) of the motor vehicle for triggering the shock absorbers of the motor vehicle (6),
wherein the trap door or the vibratory plate is arranged at the height of the correlation sensors (42) with respect to the direction of movement of the motor vehicle.

8. Device (2) for testing a chassis according to one of Claims 1 to 7, wherein a measuring head (10, 12; 26) which is arranged to the side of the measuring station (4) and which comprises at least one correlation sensor (14-18; 28-38) is provided.

9. Device (2) for testing a chassis according to Claim 8, wherein a second measuring head (12) is arranged to the side of the measuring station (4) on the side lying opposite in the transverse direction of the vehicle, wherein the second measuring head - (12) comprises at least one correlation sensor (14-18).

10. Method for testing a chassis, in particular a shock absorber of a motor vehicle (6), having the following steps:
exciting the motor vehicle (6) to undergo vibration;
capturing chronological sequences of images of portions of the motor vehicle (6) which moves on the measuring station (4), and determining direction-speed components (vx, vz) therefrom by means of correlation sensors (14-18) which are arranged to the side of the measuring station (4) and each have an assigned optical system;
determining the movement of the motor vehicle, in particular of the bodywork (22) and of the wheel (24) of the motor vehicle, from the direction-speed components (vx, vz) of the motor vehicle (6) by means of a data processing unit (38).

## Revendications

1. Dispositif de contrôle de châssis (2), notamment dispositif de contrôle d'amortisseur de chocs pour un véhicule automobile (6) sur un poste de mesure (4), **caractérisé en ce que** le dispositif de contrôle de châssis (2) possède
au moins un capteur à corrélation (28-36) muni d'une optique associée et disposé latéralement sur le poste de mesure (4), le capteur à corrélation (28-36) étant dirigé sur le poste de mesure (4) et configuré pour acquérir une séquence chronologique d'images d'une portion d'un véhicule automobile (6) qui se déplace sur le poste de mesure (4), notamment de la carrosserie (22) du véhicule automobile (6) et de la roue de véhicule automobile (24), et déterminer à partir de celle-ci des composantes de vitesse directionnelles (vx, vz), et
une unité de traitement de données (38) qui est reliée au capteur à corrélation ou aux capteurs à corrélation (28-36) et qui est configurée pour déterminer, à partir des composantes de vitesse directionnelles (vx, vz) du capteur à corrélation ou des capteurs à corrélation (28-36), le mouvement du véhicule automobile, notamment de la carrosserie (22) du véhicule automobile (6) et de la roue de véhicule automobile (24).

2. Dispositif de contrôle de châssis (2) selon la revendication 1, plusieurs capteurs à corrélation (28-36) étant présents à des hauteurs différentes afin de détecter des portions du véhicule automobile (6) de différentes hauteurs.

3. Dispositif de contrôle de châssis (2) selon la revendication 2,
au moins un capteur à corrélation de roue (32-36) étant disposé à hauteur de la roue de véhicule automobile (24) afin d'acquérir une image d'une portion de la roue de véhicule automobile (24),
le capteur à corrélation / les capteurs à corrélation (32-36) étant configuré(s) pour acquérir une séquence chronologique d'images d'une portion de la roue de véhicule automobile (24) qui se déplace sur le poste de mesure (4) et déterminer à partir de celle-ci des composantes de vitesse directionnelles (vx, vz).

4. Dispositif de contrôle de châssis (2) selon la revendication 2 ou 3,
au moins un capteur à corrélation de carrosserie (28, 30) étant disposé à hauteur de la carrosserie (22) afin d'acquérir une image d'une portion de la carrosserie (22),
le capteur à corrélation / les capteurs à corrélation (28, 30) étant configuré(s) pour acquérir une séquence chronologique d'images d'une portion de la carrosserie (22) du véhicule automobile (6) qui se déplace sur le poste de mesure (4) et déterminer à partir de celle-ci des composantes de vitesse directionnelles (vx, vz).

5. Dispositif de contrôle de châssis (2) selon l'une des revendications 1 à 4, possédant en outre un obstacle (8) à franchir par le véhicule automobile (6) et destiné à exciter les amortisseurs de chocs du véhicule automobile (6), l'obstacle (8) étant disposé avant les capteurs à corrélation (14-18) ou à hauteur des capteurs à corrélation (14-18) par rapport au sens de déplacement du véhicule automobile (6).

6. Dispositif de contrôle de châssis selon la revendication 5, un arrangement de capteurs à corrélation (46) étant présent, lequel comprend au moins deux groupes de capteurs à corrélation disposés les uns à côté des autres par rapport au sens de déplacement du véhicule automobile (6).

7. Dispositif de contrôle de châssis selon l'une des revendications 1 à 4, possédant en outre une trappe descendante ou une plaque oscillante (44) pour une roue de véhicule automobile (24) destinée à l'excitation des amortisseurs de chocs du véhicule automobile (6), la trappe descendante ou la plaque oscillante étant disposée à hauteur des capteurs à corrélation (42) par rapport au sens de déplacement du véhicule automobile.

8. Dispositif de contrôle de châssis (2) selon l'une des revendications 1 à 7, une tête de mesure (10, 12 ; 26) étant présente, disposée latéralement au poste de mesure (4) et comprenant au moins un capteur à corrélation (14-18 ; 28-38).

9. Dispositif de contrôle de châssis (2) selon la revendication 8, une deuxième tête de mesure (12) étant disposée latéralement au poste de mesure (4) sur le côté opposé dans le sens transversal du véhicule, la deuxième tête de mesure (12) comprenant au moins un capteur à corrélation (14-18).

10. Procédé de contrôle d'un châssis, notamment d'un amortisseur de chocs d'un véhicule automobile (6) comprenant les étapes suivantes :
excitation du véhicule automobile (6) à une oscillation ;
acquisition de séquences chronologiques d'images de portion du véhicule automobile (6) qui se déplace sur le poste de mesure (4) et détermination à partir de celles-ci de composantes de vitesse directionnelles (vx, vz) par des capteurs à corrélation (14-18), respectivement munis d'une optique associée et disposés latéralement sur le poste de mesure (4) ;
détermination du mouvement du véhicule automobile, notamment de la carrosserie (22) et de la roue de véhicule automobile (24), à partir des composantes de vitesse directionnelles (vx, vz) du véhicule automobile (6) par le biais d'une unité de traitement de données (38).
